# EUROPEAN PATENT SPECIFICATION

(11) **EP 2 755 834 B1**
(45) Date of publication and mention of the grant of the patent: **14.01.2015**
(21) Application number: 12775841.5
(22) Date of filing: 10.09.2012
(51) Int. Cl.: H01M 10/62, B60H 1/00, F25B 5/04, F25B 6/04, F25B 41/00, H01M 10/48, H01M 10/625

(54) **HEAT EXCHANGE APPARATUS AND METHOD FOR CONTROLLING HEAT EXCHANGE APPARATUS**
WÄRMETAUSCHER UND VERFAHREN ZUR STEUERUNG DES WÄRMETAUSCHERS
APPAREIL D'ÉCHANGE DE CHALEUR ET SON PROCÉDÉ DE COMMANDE

(30) Priority: 12.09.2011 JP 2011198283
(43) Date of publication of application: 23.07.2014
(73) Proprietor: TOYOTA JIDOSHA KABUSHIKI KAISHA, Toyota-shi, Aichi-ken, 471-8571 (JP)
(72) Inventor: KAWAKAMI, Yoshiaki, Toyota-shi, Aichi-ken, 471-8571 (JP); JOJIMA, Yuki, Toyota-shi, Aichi-ken, 471-8571 (JP); OHNO, Yuichi, Nishio, Aichi 445-0012 (JP); UCHIDA, Kazuhide, Nishio, Aichi, 445-0012 (JP)
(74) Representative: TBK
(86) International application number: PCT/IB2012/001729
(87) International publication number: WO 2013/038245

(56) References cited:
- WO-A1-2009/128813
- JP-A- 11 023 081
- US-A1- 2007 056 311

## Description

### BACKGROUND OF THE INVENTION

### 1. Field of the Invention

The invention relates to a heat exchange apparatus, and more particularly, to a heat exchange apparatus that exchanges heat between a refrigerant that flows through a vapor compression refrigeration cycle, and a section of which temperature is regulated, and also relates to a method for controlling the heat exchange apparatus.

### 2. Description of Related Art

In recent years, hybrid vehicles, fuel cell vehicles, electric automobiles and the like that are powered by the driving force of a motor have attracted attention as one approach to tackle environmental issues. Electric devices such as a motor, a generator, an inverter, a converter and a battery generate heat in such vehicles as a result of exchange of power. Accordingly, these electric devices must be cooled. Technologies have been thus developed where electric devices are cooled by relying on vapor compression refrigeration cycle that is used as an air-conditioning device for vehicles.

For instance, Japanese Patent Application Publication No. 11-23081 (JP 11-23081 A) discloses a device that is provided with a cooler having a construction in which intermediate-pressure refrigerant of a refrigeration cycle cools a heat-generating device, and that is provided with electric expansion valves that are disposed upstream and downstream of the cooler, such that the degree of opening of the valves can be controlled on the basis of an external signal, wherein a heat-releasing device is cooled using the intermediate-pressure refrigerant.

Japanese Patent Application Publication No. 2005-90862 (JP 2005-90862 A) discloses a cooling system provided with heating element cooling means for cooling a heating element, at a bypass passage that bypasses a pressure reducer, an evaporator and a compressor of a refrigeration cycle for air conditioning.

WO 2009/127292 discloses a cooling device wherein an evaporator is disposed downstream of a condenser for liquefying a refrigerant in a cooling circuit, and heat of an electric component unit is supplied to the evaporator, to thereby cool the electric component unit.

When the temperature of the battery drops, output density may drop likewise on account of inhibition of chemical reactions in a battery. Therefore, battery output may fail to be secured when the battery temperature is low. Accordingly, it may be desirable to warm the battery appropriately. In JP 11-23081 A, JP 2005-90862 A and WO 2009/127292, devices are proposed wherein electric devices, as devices to be cooled,
can be cooled, at a low cost, through cooling using the refrigerant of a refrigeration cycle. However, the idea of warming the electric devices is not described.

Regarding technologies for warming a battery that is installed on a vehicle, for instance Japanese Patent Application Publication No. 2009-257254 (JP 2009-257254 A) discloses a system wherein heat is stored in a chemical heat storage material during vehicle cruising, and, during vehicle startup, a battery is heated using the heat stored in the chemical heat storage material. Japanese Patent Application Publication No. 10-12286 (JP 10-12286 A) discloses a device wherein a heating fluid for heating a passenger compartment is used also for heating a battery.

As expounded above, JP 11-23081 A. JP 2005-90862 A, WO 2009/127292, JP 2009-257254 A and JP 10-12286 A disclose technologies that involve cooling or warming an electric device, but do not disclose the idea of controlling the temperature of the electric device for coping both when the electric device needs to be cooled and when the electric device needs to be heated. Accordingly, these technologies are inadequate as technologies for adjusting the temperature of a device such as, for instance, a battery, that is to be selectively cooled or warmed in accordance with a condition such as outside air temperature. US 2007/0056311 A1 discloses an apparatus according to the preamble of claim 1.

### SUMMARY OF THE INVENTION

In the light of the above problems, it is an object of the invention to provide a heat exchange apparatus, and a control method thereof, that allow regulating appropriately the temperature of a section to be temperature-regulated, through exchange of heat with a refrigerant.

Accordingly, the invention provides, in a first aspect, a heat exchange apparatus that exchanges heat between a refrigerant and a section to be temperature-regulated, the heat exchange apparatus having: a compressor configured to compress the refrigerant and to cause the refrigerant to circulate in the heat exchange apparatus; a first heat exchanger configured to exchange heat between the refrigerant and outside air; a second heat exchanger configured to exchange heat between the refrigerant and air for air conditioning; an opening-adjusting valve configured to adjust a degree of opening of a path of the refrigerant between the first heat exchanger and the section to be temperature-regulated; an expansion valve that is disposed in a path of the refrigerant between the section to be temperature-regulated and the second heat exchanger, and is configured to reduce a pressure of the refrigerant; and a controller configured to control a degree of opening of the opening-adjusting valve. The controller increases the degree of opening of the opening-adjusting valve to thereby heat the section to be temperature-regulated, and reduces the degree of opening of the opening-adjusting valve to thereby cool the section to be temperature-regulated.

The above heat exchange apparatus may further have a detection device that detects a temperature of the section to be temperature-regulated, wherein the controller controls the degree of opening of the opening-adjusting valve on the basis of the temperature of the section to be temperature-regulated as detected by the detection device.

In the above heat exchange apparatus, the controller may increase the degree of opening of the opening-adjusting valve when the temperature of the section to be temperature-regulated, as detected by the detection device, is below a target temperature range, and may reduce the degree of opening of the opening-adjusting valve when the temperature of the section to be temperature-regulated, as detected by the detection device, is above the target temperature range.

In the above heat exchange apparatus, the controller may control the degree of opening of the expansion valve on the basis of a temperature of the section to be temperature-regulated. In the above heat exchange apparatus, the controller may increase a degree of opening of the expansion valve when the temperature of the section to be temperature-regulated is above a target temperature range.

In the above heat exchange apparatus, the controller may control a heat exchange amount between the refrigerant and outside air in the first heat exchanger on the basis of a temperature of the section to be temperature-regulated. In the above heat exchange apparatus, the controller may reduce the heat exchange amount between the refrigerant and outside air in the first heat exchanger when the temperature of the section to be temperature-regulated is below a target temperature range.

In another aspect, the invention provides a method for controlling a heat exchange apparatus that exchanges heat between a refrigerant and a section to be temperature-regulated, wherein the heat exchange apparatus includes: a compressor configured to compress the refrigerant and to cause the refrigerant to circulate in the heat exchange apparatus; a first heat exchanger configured to exchange heat between the refrigerant and outside air; a second heat exchanger configured to exchange heat between the refrigerant and air for air conditioning; an opening-adjusting valve configured to adjust a degree of opening of a path of the refrigerant between the first heat exchanger and the section to be temperature-regulated; and an expansion valve that is disposed in a path of the refrigerant between the section to be temperature-regulated and the second heat exchanger, and that is configured to reduce a pressure of the refrigerant; in the method for controlling the heat exchange apparatus: a temperature of the section to be temperature-regulated is determined; the section to be temperature-regulated is heated by increasing a degree of opening of the opening-adjusting valve when the temperature of the section to be temperature-regulated is below a target temperature range in determining the temperature of the section to be temperature-regulated; and the section to be temperature-regulated is cooled by reducing the degree of opening of the opening-adjusting valve when the temperature of the section to be temperature-regulated is above the target temperature range in determining the temperature of the section to be temperature-regulated.

In the above control method, a heat exchange amount between the refrigerant and outside air in the first heat exchanger may be controlled on the basis of the temperature of the section to be temperature-regulated in determining the temperature of the section to be temperature-regulated; and the heat exchange amount between the refrigerant and outside air in the first heat exchanger may be reduced when the temperature of the section to be temperature-regulated is below the target temperature range in determining the temperature of the section to be temperature-regulated.

In the above control method, a degree of opening of the expansion valve may be controlled on the basis of the temperature of the section to be temperature-regulated in determining the temperature of the section to be temperature-regulated. In the above method, the degree of opening of the expansion valve may be increased when the temperature of the section to be temperature-regulated is above a target temperature range in determining the temperature of the section to be temperature-regulated.

The heat exchange apparatus and control method thereof of the invention make it possible to appropriately regulate the temperature of a section to be temperature-regulated through exchange of heat between a refrigerant and the section to be temperature-regulated.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram illustrating the configuration of a heat exchange apparatus in an embodiment of the invention;
FIG. 2 is a block diagram that illustrates in detail the configuration of an electric control unit (ECU) illustrated in FIG. 1;
FIG. 3 is a graph illustrating a target temperature range of a battery illustrated in FIG. 1;
FIG. 4 is a flowchart illustrating an example of a control method of the heat exchange of the embodiment;
FIG. 5 is a Mollier chart illustrating a first example of the state of a refrigerant that circulates through a vapor compression refrigeration cycle of the embodiment;
FIG. 6 is a Mollier chart that illustrates a second example of the state of a refrigerant that circulates through a vapor compression refrigeration cycle of the embodiment;
FIG. 7 is a Mollier chart that illustrates a third example of the state of a refrigerant that circulates through a vapor compression refrigeration cycle of the embodiment; and
FIG. 8 is a time chart illustrating the change over time of battery temperature according to the embodiment.

### DETAILED DESCRIPTION OF EMBODIMENTS

Embodiments of the invention are explained next based on accompanying drawings. In the drawings below, identical or equivalent portions are denoted by identical reference numerals, and a recurrent explanation thereof will be omitted.

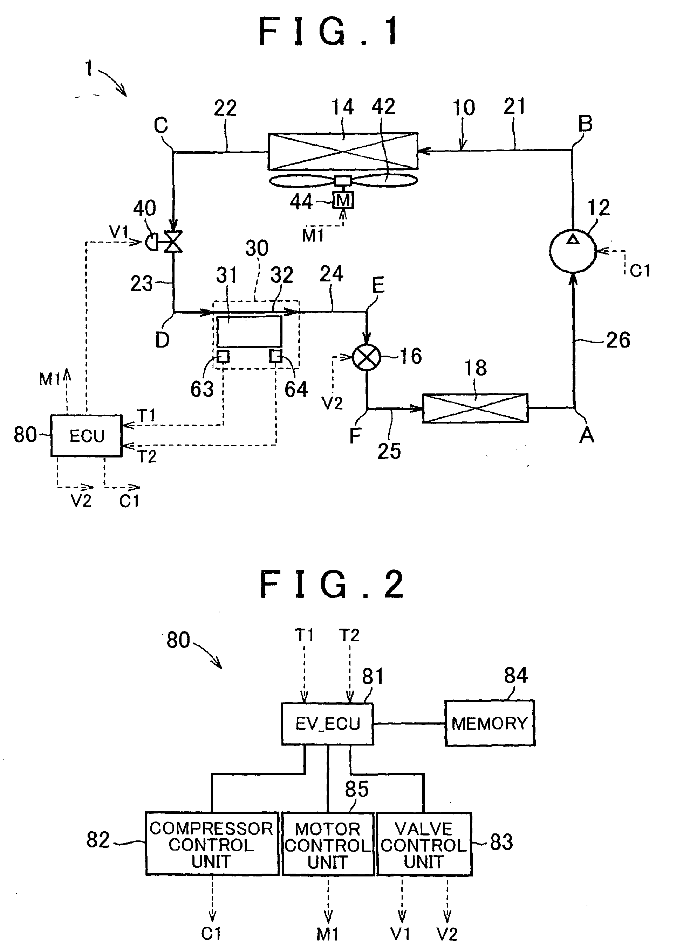

FIG. 1 is a schematic diagram illustrating the configuration of a heat exchange apparatus 1 of the present embodiment. As illustrated in FIG. 1, the heat exchange apparatus 1 is provided with a vapor compression refrigeration cycle 10. The vapor compression refrigeration cycle 10 has a compressor 12, a heat exchanger 14 as a first heat exchanger, an expansion valve 16, and a heat exchanger 18 as a second heat exchanger. For instance, the vapor compression refrigeration cycle 10 is installed in a vehicle, for the purpose of vehicle cooling. Cooling by way of the vapor compression refrigeration cycle 10 is performed when, for instance, a switch for cooling is switched on, or when there is automatically selected a control mode of adjusting the temperature of the vehicle interior to a set temperature and the temperature in a passenger compartment is higher than the set temperature.

The compressor 12 that operates with a power source in the form of a motor or an engine installed in the vehicle, causes a refrigerant gas to be adiabatically compressed into a superheated-state refrigerant gas. The compressor 12 takes in and compresses refrigerant that flows from the heat exchanger 18 during operation of the vapor compression refrigeration cycle 10, and discharges high-temperature, high-pressure gas-phase refrigerant to a refrigerant passage 21. Through discharge of the refrigerant to the refrigerant passage 21, the compressor 12 causes the refrigerant to circulate to the vapor compression refrigeration cycle 10.

In the heat exchanger 14, superheated-state refrigerant gas compressed in the compressor 12 dissipates heat isobarically into an external medium, and becomes a refrigerant liquid. At the heat exchanger 14, the high-pressure gas-phase refrigerant discharged by the compressor 12 dissipates heat into the surroundings, and is cooled and condenses (liquefies) as a result. The heat exchanger 14 has tubes through which the refrigerant flows, and fins for heat exchange between the refrigerant that flows through the tubes and air that surrounds the heat exchanger 14.

Heat exchange between cooling air and the refrigerant takes place in the heat exchanger 14. Cooling air is supplied to the heat exchanger 14 as a result of natural draft that arises as the vehicle travels. Alternatively, cooling air may be supplied to the heat exchanger 14 through forced draft by a condenser fan 42 or a cooling fan, for instance a radiator fan for engine cooling. The temperature of the refrigerant drops, and the refrigerant liquefies, as a result of heat exchange at the heat exchanger 14.

The expansion valve 16 causes the high-pressure liquid-phase refrigerant that flows through a refrigerant passage 25 to be sprayed out of small holes, as a result of which the refrigerant passage 25 expands and becomes low-temperature, low-pressure mist-like refrigerant. The expansion valve 16 reduces the pressure of the refrigerant liquid condensed by the heat exchanger 14, and the refrigerant liquid becomes thereby a wet vapor in a gas-liquid mixture state.

The mist-like refrigerant that flows through the interior of the heat exchanger 18 vaporizes, and, as a result, absorbs heat from surrounding air that is introduced so as to come into contact with the heat exchanger 18. The heat of vaporization upon evaporation of the wet vapor of the refrigerant to a refrigerant gas, using the refrigerant that has been pressure-reduced by the expansion valve 16, is absorbed, in the heat exchanger 18, from the air for air conditioning that flows towards the vehicle interior. The vehicle interior becomes cooled as a result. The air for air conditioning, having had the temperature thereof lowered through absorption of heat in the heat exchanger 18, is returned again to the vehicle interior, and the vehicle interior is cooled thereby. The refrigerant is heated in the heat exchanger 18 through absorption of surrounding heat.

The heat exchanger 18 has tubes that distribute refrigerant, and fins for heat exchange between the refrigerant that flows through the tubes and air that surrounds the heat exchanger 18. Refrigerant in a wet vapor state flows through the tubes. When flowing through the tubes, the refrigerant evaporates through absorption, in the form of latent heat of vaporization, of heat from air in the vehicle interior, via the fins, and becomes superheated vapor on account of sensible heat. The vaporized refrigerant flows through the refrigerant passage 26 towards the compressor 12. The compressor 12 compresses the refrigerant that flows from the heat exchanger 18.

The vapor compression refrigeration cycle 10 has the refrigerant passage 21 that communicates the compressor 12 with the heat exchanger 14, refrigerant passages 22, 23, 24 that communicate the heat exchanger 14 with the expansion valve 16, a refrigerant passage 25 that communicates the expansion valve 16 with the heat exchanger 18, and a refrigerant passage 26 that communicates the heat exchanger 18 with the compressor 12.

The refrigerant passage 21 is a passage for causing the refrigerant to flow from the compressor 12 to the heat exchanger 14. The refrigerant flows between the compressor 12 and the heat exchanger 14, via the refrigerant passage 21, from an outlet of the compressor 12 towards an inlet of the heat exchanger 14. The refrigerant passages 22 to 24 are passages for causing the refrigerant to flow from the heat exchanger 14 towards the expansion valve 16. The refrigerant flows between the heat exchanger 14 and the expansion valve 16, via the refrigerant passages 22 to 24, from an outlet of the heat exchanger 14 towards an inlet of the expansion valve 16.

The refrigerant passage 25 is a passage for causing the refrigerant to flow from the expansion valve 16 to the heat exchanger 18. The refrigerant flows between the expansion valve 16 and the heat exchanger 18, via the refrigerant passage 25, from an outlet of the expansion valve 16 towards an inlet of the heat exchanger 18. The refrigerant passage 26 is a passage for causing the refrigerant to flow from the heat exchanger 18 to the compressor 12. The refrigerant flows between the heat exchanger 18 and the compressor 12, via the refrigerant passage 26, from an outlet of the heat exchanger 18 towards an inlet of the compressor 12.

The vapor compression refrigeration cycle 10 is configured through connection of the compressor 12, the heat exchanger 14, the expansion valve 16 and the heat exchanger 18, by way of the refrigerant passages 21 to 26. As the refrigerant of the vapor compression refrigeration cycle 10 there can be used, for instance, carbon dioxide, a hydrocarbon such as propane or isobutane, ammonia, fluorocarbons, water or the like.

The path traversed by the refrigerant that flows from the outlet of the heat exchanger 14 towards the inlet of the expansion valve 16 includes the refrigerant passage 22 from the outlet side of the heat exchanger 14 towards a opening-adjusting valve 40, the refrigerant passage 23 from the opening-adjusting valve 40 to a heat exchange unit 30, and the refrigerant passage 24 through which the refrigerant flows from the outlet side of the heat exchange unit 30 towards the expansion valve 16. Refrigerant liquid flows from the opening-adjusting valve 40 towards the heat exchange unit 30 via the refrigerant passage 23. The refrigerant that passes through the heat exchange unit 30 flows towards the expansion valve 16 via the refrigerant passage 24. The heat exchange unit 30 is provided on the path of the refrigerant that flows from the heat exchanger 14 towards the expansion valve 16.

The heat exchange unit 30 has a battery 31, which is a storage battery installed in a vehicle, and a cooling passage 32 that is a pipe through which the refrigerant flows. The battery 31 is an example of a section to be temperature-regulated that has the temperature thereof regulated in the heat exchange apparatus 1. One end of the cooling passage 32 is connected to the refrigerant passage 23, and the other end of the cooling passage 32 is connected to the refrigerant passage 24.

The path of the refrigerant between the opening-adjusting valve 40 and the expansion valve 16 includes the refrigerant passage 23 upstream of the heat exchange unit 30 (side closer to the opening-adjusting valve 40), the cooling passage 32 that is included in the heat exchange unit 30, and the refrigerant passage 24 downstream (side closer to the expansion valve 16) of the heat exchange unit 30. The refrigerant passage 23 is a passage for causing the refrigerant to flow from the opening-adjusting valve 40 towards the heat exchange unit 30. The refrigerant passage 24 is a passage for causing the refrigerant to flow from the heat exchange unit 30 towards the expansion valve 16.

The refrigerant that flows towards the heat exchange unit 30 and via the cooling passage 32 robs heat from the battery 31, as a heat source, and cools thereby the battery 31. The heat exchange unit 30 cools the battery 31 using the refrigerant that flows to the cooling passage 32 via the refrigerant passage 23. The battery and the refrigerant that flows through the cooling passage 32 exchange heat with each other in the heat exchange unit 30. As a result, the battery 31 is cooled and the refrigerant is heated. The refrigerant moves then on from the heat exchange unit 30 towards the expansion valve 16, via the refrigerant passage 24.

The heat exchange unit 30 is provided so as to have a structure than enables exchange of heat between the battery 31 and the refrigerant at the cooling passage 32. In the present embodiment, the heat exchange unit 30 has the cooling passage 32 that is formed in such a manner that, for instance, an outer peripheral face of the cooling passage 32 comes into direct contact with a chassis of the battery 31. The cooling passage 32 has a portion that is adjacent to the chassis of the battery 31. Heat exchange can take place, at that portion, between the battery 31 and the refrigerant that flows through the cooling passage 32.

The battery 31 is cooled by being directly connected to the outer peripheral face of the cooling passage 32 that forms part of the path of the refrigerant from the heat exchanger 14 of the vapor compression refrigeration cycle 10 up to the expansion valve 16. The battery 31 is disposed outside the cooling passage 32, and hence the battery 31 does not interfere with the flow of refrigerant that flows through the interior of the cooling passage 32. As a result, pressure loss in the vapor compression refrigeration cycle 10 does not increase, and, accordingly, the battery 31 can be cooled without increasing the power of the compressor 12.

Alternatively, the heat exchange unit 30 may be provided with an arbitrary conventional heating pipe that is disposed interposed between the battery 31 and the cooling passage 32. In this case, the battery 31 is connected to the outer peripheral face of the cooling passage 32 via the heating pipe, and heat is transferred from the battery 31 to the cooling passage 32, via the heating pipe, so that the battery 31 is cooled as a result. The heat transfer efficiency between the cooling passage 32 and the battery 31 is increased by setting the battery 31 as a heating section of the heating pipe and the cooling passage 32 as a cooling section of the heating pipe. The cooling efficiency of the battery 31 can be enhanced thereby. For instance, there can be used a wick heating pipe.

Heat can be reliably transferred from the battery 31 to the cooling passage 32 by way of the heating pipe. Therefore, some distance may exist between the battery 31 and the cooling passage 32, and there is no need to provide the cooling passage 32 in a complex manner in order to bring the cooling passage 32 into contact with the battery 31. The degree of freedom in the arrangement of the battery 31 can be enhanced as a result.

The battery 31 is a power storage device that is provided in an electric device that generates heat upon exchange of power. The battery 31 is a secondary battery such as a lithium ion battery or a nickel-metal hydride battery. A capacitor may be used instead of the battery 31.

The heat exchange unit 30 has temperature sensors 63, 64. The temperature sensors 63, 64 function as a detection unit for detecting the temperature of the battery 31. As illustrated in FIG. 1, the plurality of temperature sensors may be provided in order to detect the temperature at a plurality of sites of the battery 31, or, alternatively, one temperature sensor may be provided at a position that allows detecting a representative value of temperature of the battery 31. The temperature of the battery 31 can be measured more accurately, and the reliability of control based on the temperature of the battery 31 can be enhanced, if a plurality of temperature sensors is provided.

The opening-adjusting valve 40 is provided between an outlet of the heat exchanger 14 and the heat exchange unit 30 that has the battery 31 as a section to be temperature-regulated. The heat exchanger 14 and the opening-adjusting valve 40 are connected by way of the refrigerant passage 22. The refrigerant flows, through the refrigerant passage 22, from the heat exchanger 14 towards the opening-adjusting valve 40. The opening-adjusting valve 40 and the heat exchange unit 30 are connected by way of the refrigerant passage 23. The refrigerant flows, through the refrigerant passage 23, from the opening-adjusting valve 40 towards the heat exchange unit 30.

The opening-adjusting valve 40 is provided in such a manner that the degree of opening of the path of the refrigerant between the heat exchanger 14 and the heat exchange unit 30 can be adjusted through adjustment of the degree of opening of the opening-adjusting valve 40. The opening-adjusting valve 40 allows adjusting the flow rate of the refrigerant from the heat exchanger 14 towards the heat exchange unit 30. When the degree of opening of the opening-adjusting valve 40 is reduced, there decreases the flow rate of refrigerant that flows towards the heat exchange unit 30, and the cooling capacity of cooling of the battery 31 decreases. When the degree of opening of the opening-adjusting valve 40 is increased, there increases the flow rate of refrigerant that flows towards the heat exchange unit 30, and the cooling capacity of the battery 31 increases.

The heat exchanger 18 regulates the temperature of the air for air conditioning, through heat exchange between the refrigerant and air for air conditioning. The air for air conditioning may be outside air or air in the vehicle interior. During the cooling operation, the air for air conditioning is cooled in the heat exchanger 18, and the refrigerant is enhanced by receiving transfer of heat from the air for air conditioning.

The refrigerant circulates through the vapor compression refrigeration cycle 10 by passing through a refrigerant circulation flow channel wherein the compressor 12, the heat exchanger 14, the expansion valve 16 and the heat exchanger 18 are sequentially connected by way of the refrigerant passages 21 to 26. The refrigerant flows in the vapor compression refrigeration cycle 10 so as to pass, in succession, point A, point B, point C, point D, point E and point F illustrated in FIG. 1. The refrigerant circulates through the compressor 12, the heat exchanger 14, the expansion valve 16 and the heat exchanger 18.

During the cooling operation, heat from surrounding air that is introduced by coming into contact with the heat exchanger 18 is absorbed through vaporization of the mist-like refrigerant that flows through the interior of the heat exchanger 18. The heat of vaporization upon evaporation of the wet vapor of the refrigerant to a refrigerant gas, using the low-temperature, low-pressure refrigerant that undergoes throttle expansion and pressure reduction at the expansion valve 16, is absorbed, in the heat exchanger 18, from the air for air conditioning that flows towards the vehicle interior. The vehicle interior is cooled thereby. The air for air conditioning, having had the temperature thereof lowered through absorption of heat in the heat exchanger 18, flows back to the vehicle interior, and the vehicle interior is cooled as a result.

During the operation of the vapor compression refrigeration cycle 10, the interior of the passenger compartment is cooled through absorption, by the refrigerant, of heat of vaporization, from the air in the vehicle interior, in the heat exchanger 18 that is used as an evaporator. The high-pressure liquid refrigerant that flows out of the heat exchanger 14 flows towards the heat exchange unit 30, and cools the battery 31 through exchange of heat with the battery 31. The heat exchange apparatus 1 cools the battery 31, which is a heat source installed in the vehicle, by way of the vapor compression refrigeration cycle 10 for air conditioning of the vehicle interior.

In the heat exchanger 18, the battery 31 is cooled using the vapor compression refrigeration cycle 10 that is provided for cooling a section to be cooled, and hence no dedicated water circulation pump, cooling fan or the like need be provided in order to cool the battery 31. As a result, the structure that is necessary to cool the battery 31 can be downsized, and the configuration involved can be simplified. The manufacturing costs of the heat exchange apparatus 1 can be reduced as a result. Also, no power source of a pump or cooling fan for cooling the battery 31 need be operated, and no power need be consumed for operating the power source. Therefore, power consumption for cooling the battery 31 can be accordingly reduced.

The cooling capacity for the passenger compartment is lowered through reduction of the cooling capacity of air in the passenger compartment, by the heat exchanger 18, when the low-temperature, low-pressure refrigerant, having passed through the expansion valve 16, is used to cool the battery 31. In the heat exchange apparatus 1 of the present embodiment, the heat exchange unit 30 that cools the battery 31 is provided on a path of the refrigerant that flows from the heat exchanger 14 towards the expansion valve 16. The refrigerant is cooled sufficiently in the heat exchanger 14, so that, as a result, the refrigerant has, at the outlet of the expansion valve 16, the temperature and pressure that that were originally required for cooling the vehicle interior. As a result, the amount of heat uptake from the exterior upon evaporation of the refrigerant in the heat exchanger 18 can be sufficiently increased.

The heat dissipation capacity of the heat exchanger 14 allowing for sufficient cooling of the refrigerant is established so as to enable cooling of the battery 31 without affecting the cooling capacity whereby air in the passenger compartment is cooled. Both the cooling capacity of the battery 31 and the cooling capacity for the passenger compartment can be reliably secured as a result.

An explanation follows next on the control of the heat exchange apparatus 1 of the present embodiment. As illustrated in FIG. 1, an ECU 80, as a control unit that controls the heat exchange apparatus 1, receives signals T1, T2 that denote the temperature of the battery 31, from temperature sensors 63, 64. The ECU 80 outputs a signal C1 that instructs startup or stop to the compressor 12, signals V1, V2 that instruct the degree of opening of the opening-adjusting valve 40 and of the expansion valve 16. respectively, and a signal M1 that instructs revolutions to a motor 44 for rotational driving of the condenser fan 42.

FIG. 2 is a block diagram that illustrates in detail the configuration of the ECU 80. The ECU 80 is provided with an electric vehicle (EV)_ECU 81 that oversees all the control units of the vehicle in which the heat exchange apparatus 1 is installed. The ECU 80 is provided with a compressor control unit 82 that controls startup and stop of the compressor 12, a valve control unit 83 that controls the degree of opening of the expansion valve 16 and of the opening-adjusting valve 40, and a motor control unit 85 that controls the revolutions of the motor 44. The ECU 80 has also a memory 84 such as a random access memory (RAM) or a read only memory (ROM). The heat exchange apparatus 1 is controlled through execution of various processes, by the ECU 80, in accordance with a control program stored in the memory 84.

The signals T1, T2 that denote the measured value of temperature in the battery 31 are received by the EV_ECU 81. The EV_ECU 81 compares the current temperature of the battery 31, as detected by the temperature sensors 63, 64, with an upper limit value and a lower limit value of temperature of the battery 31 as stored in the memory 84, and determines whether or not the temperature of the battery 31 lies in a target temperature range. According to the determination result, the EV_ECU 81 transmits a respective control signal to the compressor control unit 82, the valve control unit 83 and the motor control unit 85.

The compressor control unit 82 receives the control command transmitted by the EV_ECU 81, and transmits, to the compressor 12, the signal C1 that instructs startup or stop of the compressor 12. The valve control unit 83 receives the control command transmitted by the EV_ECU 81, transmits, to the opening-adjusting valve 40, the signal V1 that instructs the degree of opening of the opening-adjusting valve 40, and transmits, to the expansion valve 16, the signal V2 that instructs the degree of opening of the expansion valve 16. The valve control unit 85 receives the control command transmitted by the EV_ECU 81, and transmits, to the motor 44, the signal M1 that instructs the revolutions of the motor 44. The ECU 80 controls the degree of opening of the expansion valve 16 and of the opening-adjusting valve 40, on the basis of the temperature of the battery 31 as detected by the temperature sensors 63, 64, and controls the revolutions of the motor 44.

The amount of heat exchange between outside air and the refrigerant in the heat exchanger 14 is controlled upon modification of the revolutions of the motor 44. When the revolutions of the motor 44 are increased and the rotational speed of the condenser fan 42 is increased, there increases the flow rate of air that is supplied to the heat exchanger 14, and there increases the heat exchange amount between the refrigerant and outside air in the heat exchanger 14. When the revolutions of the motor 44 and the rotational speed of the condenser fan 42 are reduced, there drops the flow rate of air that is supplied to the heat exchanger 14, and there decreases the heat exchange amount between the refrigerant and outside air in the heat exchanger 14.

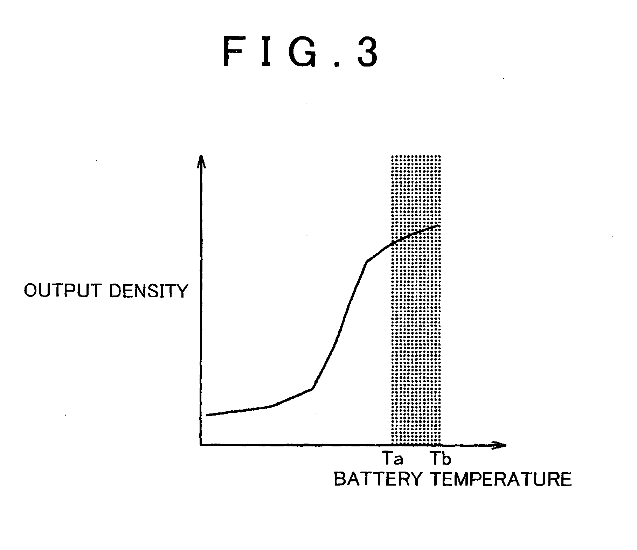

FIG. 3 is a graph illustrating a target temperature range of the battery 31. The abscissa axis in FIG. 3 represents the temperature of the battery 31, and the ordinate axis represents the output density of the battery 31. As illustrated in FIG. 3, a relationship holds between the temperature and the output density of the battery 31, such that if the battery 31 is at a low temperature, the output density is small, and the output density rises steeply when the temperature rises by some extent. It is difficult to ensure the output of the battery 31 when the temperature of the latter is low. Accordingly, the battery 31 is preferably used once an appropriate temperature range in which the battery 31 is used has been defined. A temperature target range of the battery 31 is established as denoted by the shaded portion of FIG. 3. The lower limit value of this target temperature range is Ta and the upper limit value is Tb.

In a case where, for instance, the section to be temperature-regulated is the battery 31, the lower limit value Ta of the target temperature range may be set to 25°C, and the upper limit value Tb of the target temperature range may be set to 45°C. The target temperature range may vary depending on the type of the battery 31, and may further vary depending on the characteristics of each individual battery 31. In consequence, an optimal target temperature range may be prescribed for each individual battery 31.

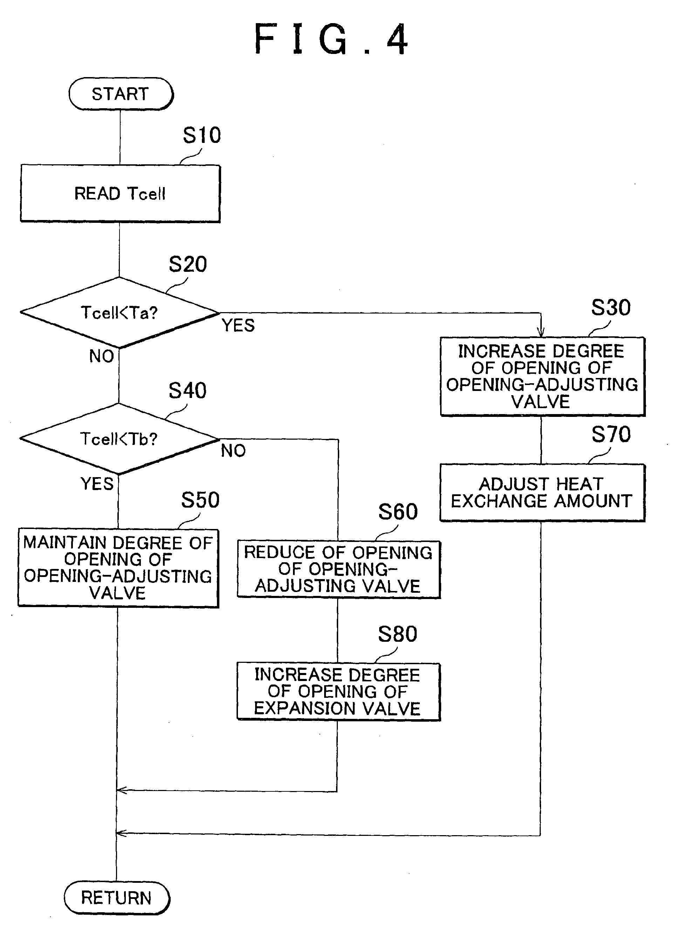

FIG. 4 is a flowchart illustrating an example of the method for controlling the heat exchange apparatus 1. Upon start of temperature control of the battery 31, which is a section to be temperature-regulated, using the heat exchange apparatus 1, the temperature (Tcell) of the battery 31 is read first in step (S10), as illustrated in FIG. 4. Specifically, Tcell is read through reception, by the ECU 80, of the signals T1, T2 that denote the temperature of the battery 31, using the temperature sensors 63, 64 that are attached to the battery 31.

Next, in step (S20), it is determined whether or not the temperature (Tcell) of the battery 31 is below the lower limit value Ta of the target temperature range. If in step (S20) there holds Tcell < Ta, i.e. if the temperature of the battery 31 is determined to be below the target temperature range, then, in step (S30) next, the degree of opening of the opening-adjusting valve 40 is increased, and in step (S70), there is adjusted the heat exchange amount between the refrigerant and outside air in the heat exchanger 14.

Through an increase in the degree of opening of the opening-adjusting valve 40, more refrigerant is supplied to the heat exchange unit 30, and the revolutions of the motor 44 are reduced, whereby less air is blown from the condenser fan 42 to the heat exchanger 14. The high-temperature refrigerant compressed by the compressor 12 is prevented from being cooled by the heat exchanger 14, and the drop in the temperature of the refrigerant is therefore prevented through reduction of the heat exchange amount between refrigerant and outside air in the heat exchanger 14. As a result, refrigerant at a higher temperature is supplied to the heat exchange unit 30. In the heat exchange unit 30, heat is transferred from the refrigerant to the battery 31 through flow of the refrigerant, at a higher temperature than that of the battery 31 as the section to be temperature-regulated, towards the heat exchange unit 30. The refrigerant is cooled in the interior of heat exchange unit 30, and the battery 31 is warmed.

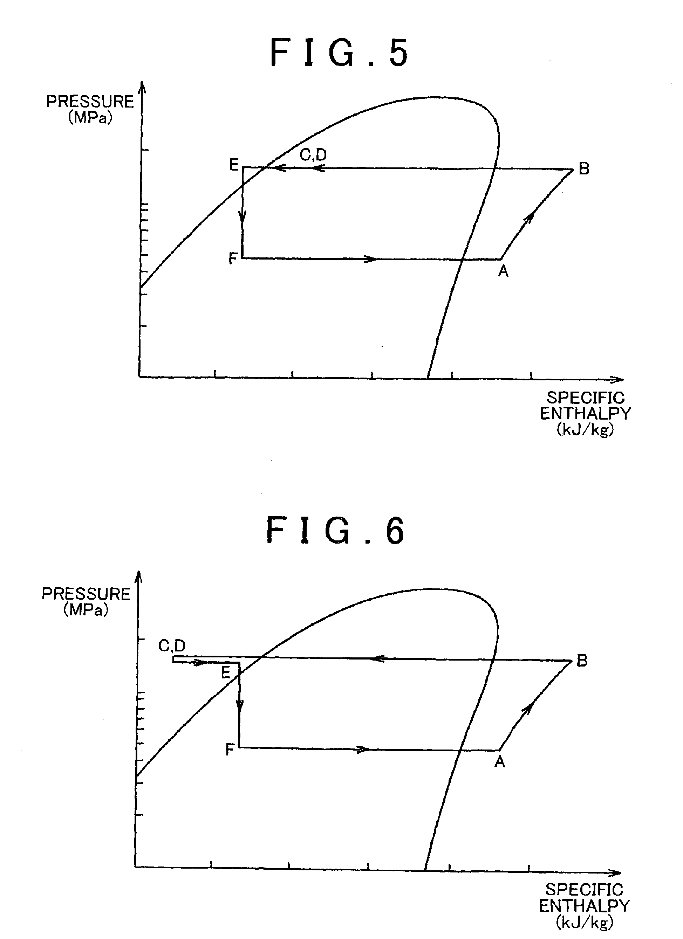

FIG. 5 is a Mollier chart that illustrates a first example of a state of a refrigerant that circulates through the vapor compression refrigeration cycle 10. The abscissa axis of FIG. 5 represents the specific enthalpy of the refrigerant, and the ordinate axis represents the absolute pressure of the refrigerant. The units of specific enthalpy are kJ/kg, and the units of absolute pressure are MPa. The curves in the figure are a saturated vapor line and a saturated liquid line of the refrigerant. FIG. 5 depicts the thermodynamic state of the refrigerant at the various points (i.e. points A, B, C, D, E and F) in the vapor compression refrigeration cycle 10 illustrated in FIG. 1.

The refrigerant in a superheated vapor state (point A) is taken into the compressor 12 and is adiabatically compressed, in the compressor 12, along an isentropic line, as illustrated in FIG. 5. The temperature and pressure of the refrigerant rise in response to compression, and the refrigerant becomes high-temperature, high-pressure superheated vapor having a high degree of superheat (point B), and flows towards the heat exchanger 14. The gas-phase refrigerant discharged by the compressor 12 dissipates heat into the surroundings and is cooled at the heat exchanger 14, and condenses (liquefies) as a result. The temperature of the refrigerant drops on account of heat exchange with outside air at the heat exchanger 14, and the refrigerant liquefies. The high-pressure refrigerant vapor that enters the heat exchanger 14 turns from superheated vapor into dry saturated vapor, isobarically, at the heat exchanger 14, releases latent heat of condensation, and liquefies gradually to a wet vapor in a gas-liquid mixed state (point C).

In the heat exchanger 14, the refrigerant dissipates heat into outside air and becomes cooled as a result. The heat exchange amount between the refrigerant and outside air in the heat exchanger 14 is established through control of the revolutions of the motor 44 that rotationally drives the condenser fan 42. In this case, the battery 31 must be heated through delivery of heat to the battery 31 out of the refrigerant, in the heat exchange unit 30. Therefore, the heat exchange amount in the heat exchanger 14 is established in such a manner that the temperature of the refrigerant that flows out of the heat exchanger 14 becomes higher than the temperature of the battery 31. The refrigerant that flows out of the heat exchanger 14 is kept at high temperature through suppression of cooling of the refrigerant, by reducing the heat exchange amount in the heat exchanger 14.

The refrigerant that flows out of the heat exchanger 14 passes through the refrigerant passage 22, the opening-adjusting valve 40 and the refrigerant passage 23, and flows towards the heat exchange unit 30. Thereupon, the degree of opening of the opening-adjusting valve 40 is increased, and typically the opening-adjusting valve 40 is opened fully (degree of opening 100%), as a result of which the pressure and the specific enthalpy of the refrigerant exhibit virtually no change when the refrigerant passes through the opening-adjusting valve 40. That is, the refrigerant that flows through the refrigerant passage 22 and the refrigerant that flows through the refrigerant passage 23 have substantially the same pressure and specific enthalpy. In FIG. 5, point C denotes the state of the refrigerant that flows through the refrigerant passage 22, and point D denotes the state of the refrigerant that flows through the refrigerant passage 23. In FIG. 5, point C and point D are depicted at substantially the same position.

The refrigerant that has passed through the opening-adjusting valve 40 flows towards the cooling passage 32 of the heat exchange unit 30 via the refrigerant passage 23. In the heat exchange unit 30, heat from the high-temperature refrigerant that flows through the interior of the cooling passage 32 is transmitted to the battery 31, and the battery 31 is heated as a result. The refrigerant is cooled through heat exchange with the battery 31. The refrigerant, in a wet vapor state, is cooled through heat exchange with the battery 31, and condenses. When all the refrigerant has condensed in the heat exchange unit 30, the refrigerant becomes a saturated liquid. The refrigerant further releases then sensible heat, and becomes a supercooled liquid (point E).

The high-pressure liquid-phase refrigerant liquefied in the heat exchange unit 30 flows into the expansion valve 16 via the refrigerant passage 24. In the expansion valve 16, the refrigerant in a supercooled-liquid state undergoes throttle expansion, and the temperature and pressure of the refrigerant drop, without change in the specific enthalpy of the refrigerant. Thereby, the refrigerant becomes a low-temperature, low-pressure wet vapor in a gas-liquid mixed state (point F).

The refrigerant in a wet vapor state having had the temperature thereof lowered at the expansion valve 16 flows into the heat exchanger 18 via the refrigerant passage 25. The refrigerant in a wet vapor state flows into the tubes of the heat exchanger 18. When flowing through the tubes of the heat exchanger 18, the refrigerant evaporates isobarically, through absorption, in the form of latent heat of vaporization, of heat from the air for air conditioning, via the fins. When all the refrigerant has become dry saturated vapor, the temperature of the refrigerant vapor further rises by virtue of the sensible heat, and the vapor becomes superheated vapor (point A). The vaporized refrigerant flows through the refrigerant passage 26 to be taken into the compressor 12. The compressor 12 compresses the refrigerant that flows from the heat exchanger 18.

The refrigerant undergoes repeatedly and continuously changes of state, namely, compression, condensation, throttle expansion and evaporation, according to a cycle such as the above-described one. The explanation of the vapor compression refrigeration cycle described above deals with a theoretical refrigeration cycle. Needless to say, however, loss in the compressor 12, pressure loss of the refrigerant, as well as heat loss must be taken into account in an actual compression refrigeration cycle 10.

The temperature of the battery 31 is measured by the temperature sensors 63, 64; if the temperature of the battery 31 is below a target temperature range, the degree of opening of the opening-adjusting valve 40 is increased, and cooling of the refrigerant at the heat exchanger 14 is curbed, so that, as a result, high-temperature refrigerant is supplied to the heat exchange unit 30. The battery 31 is heated using this high-temperature refrigerant. When the battery 31 must be warmed up, the battery 31 is actively heated using the refrigerant that flows through the vapor compression refrigeration cycle 10. The temperature of the battery 31 is raised promptly thereby. The battery 31 can be thus heated by relying on a simple configuration and a simple control scheme, and the temperature of the battery 31 can be raised promptly to be equal to or greater than a lower limit value of the target temperature range; and hence it becomes easy to control the temperature of the battery 31 appropriately.

After heating the battery 31, the refrigerant undergoes throttle expansion at the expansion valve 16. As a result, the refrigerant that flows into the heat exchanger 18 has the temperature and pressure originally required for cooling the interior of the passenger compartment of the vehicle. It becomes possible therefore to heat the battery 31 without affecting the cooling capacity whereby air in the passenger compartment is cooled.

Returning to FIG. 4, if in step (S20) it is determined that Tcell ≥ Ta, i.e. that the temperature of the battery 31 is equal to or greater than the lower limit value of the target temperature range, then in step (S40) next it is determined whether or not the temperature (Tcell) of the battery 31 is below the upper limit value Tb of the target temperature range. If in step (S40) it is determined that Tcell < To be, i.e. that the temperature of the battery 31 is below the upper limit value of the target temperature range, and the temperature of the battery 31 lies within the target temperature range, then in step (S50) next, the degree of opening of the opening-adjusting valve 40 is maintained.

FIG. 6 is a Mollier chart that illustrates a second example of a state of a refrigerant that circulates through the vapor compression refrigeration cycle 10. The abscissa axis of FIG. 6 represents the specific enthalpy of the refrigerant, and the ordinate axis represents the absolute pressure of the refrigerant. The units of specific enthalpy are kJ/kg, and the units of absolute pressure are MPa. The curves in the figure are a saturated vapor line and a saturated liquid line of the refrigerant. FIG. 6 depicts the thermodynamic state of the refrigerant at the various points (i.e. points A. B, C, D, E and F) in the vapor compression refrigeration cycle 10 illustrated in FIG. 1.

The refrigerant in a superheated vapor state (point A) is taken into the compressor 12 and is adiabatically compressed, in the compressor 12, along an isentropic line, as illustrated in FIG. 6. The temperature and pressure of the refrigerant rise in response to compression, and the refrigerant becomes high-temperature, high-pressure superheated vapor having a high degree of superheat (point B), and flows towards the heat exchanger 14.

The high-pressure refrigerant vapor that enters the heat exchanger 14 becomes cooled through heat exchange with outside air at the heat exchanger 14. The refrigerant turns, isobarically, from superheated vapor to dry saturated vapor, releases latent heat of condensation, and liquefies gradually to a wet vapor in a gas-liquid mixed state; when all the refrigerant condenses, it becomes a saturated liquid that further releases sensible heat, to become thereby a supercooled liquid (point C). In the heat exchanger 14, superheated-state refrigerant gas compressed in the compressor 12 dissipates heat isobarically into an external medium, and becomes a refrigerant liquid. The gas-phase refrigerant discharged by the compressor 12 dissipates heat into the surroundings and is cooled at the heat exchanger 14, and condenses (liquefies) as a result. The temperature of the refrigerant drops on account of heat exchange with outside air at the heat exchanger 14, and the refrigerant liquefies.

When the temperature of the battery 31 lies within the target temperature range, the battery 31 must be cooled enough so as to prevent overheating of the battery 31. Accordingly, the heat exchange amount at the heat exchanger 14 is established in such a manner that the temperature of the refrigerant that flows out of the heat exchanger 14 becomes lower than the temperature of the battery 31, and the battery 31 is cooled through transfer of heat from the battery 31 to the refrigerant at the heat exchange unit 30. The revolutions of the motor 44 are increased and the draft rate from the condenser fan 42 to the heat exchanger 14 is increased, so that, as a result, the refrigerant can be cooled, in the heat exchanger 14, down to a supercooling region, and the temperature of the refrigerant that flows out of the heat exchanger 14 can be sufficiently lowered.

The refrigerant that flows out of the heat exchanger 14 passes through the refrigerant passage 22, the opening-adjusting valve 40 and the refrigerant passage 23, and flows towards the heat exchange unit 30. The pressure and specific enthalpy of the refrigerant exhibit virtually no change when the refrigerant passes through the opening-adjusting valve 40: That is, the refrigerant that flows through the refrigerant passage 22 and the refrigerant that flows through the refrigerant passage 23 have substantially the same pressure and specific enthalpy. In FIG. 6, point C denotes the state of the refrigerant that flows through the refrigerant passage 22, and point D denotes the state of the refrigerant that flows through the refrigerant passage 23. In FIG. 6, point C and point D are depicted at substantially the same position.

The refrigerant that has passed through the opening-adjusting valve 40 flows towards the cooling passage 32 of the heat exchange unit 30 via the refrigerant passage 23. In the heat exchange unit 30, the battery 31 is cooled through transfer of heat from the battery 31 to the high-temperature refrigerant that flows through the interior of the cooling passage 32. Through heat exchange with the battery 31, the refrigerant is heated, and the degree of supercooling of the refrigerant decreases. That is, the temperature of the refrigerant in a supercooled-liquid state rises through uptake of sensible heat from the battery 31, and approaches the saturation temperature of the liquid refrigerant, so that the refrigerant is heated thus to a temperature (point E) slightly below the saturation temperature.

Thereafter, the refrigerant flows into the expansion valve 16 via the refrigerant passage 24. In the expansion valve 16, the refrigerant in a supercooled-liquid state undergoes throttle expansion, and the temperature and pressure of the refrigerant drop, without change in the specific enthalpy of the refrigerant. Thereby, the refrigerant becomes a low-temperature, low-pressure wet vapor in a gas-liquid mixed state (point F).

The refrigerant in a wet vapor state having had the temperature thereof lowered at the expansion valve 16 flows into the heat exchanger 18 via the refrigerant passage 25. The refrigerant in a wet vapor state flows into the tubes of the heat exchanger 18. When flowing through the tubes of the heat exchanger 18, the refrigerant evaporates isobarically, through absorption, in the form of latent heat of vaporization, of heat from the air for air conditioning, via the fins. When all the refrigerant has become dry saturated vapor, the temperature of the refrigerant vapor further rises by virtue of the sensible heat, and the vapor becomes superheated vapor (point A). The vaporized refrigerant flows through the refrigerant passage 26 to be taken into the compressor 12. The compressor 12 compresses the refrigerant that flows from the heat exchanger 18. The refrigerant undergoes repeatedly and continuously changes of state, namely, compression, condensation, throttle expansion and evaporation, according to a cycle such as the above-described one.

The temperature of the battery 31 is measured by way of the temperature sensors 63, 64. If the temperature of the battery 31 lies within the target temperature range, the degree of opening of the opening-adjusting valve 40 is maintained; as a result, low-temperature refrigerant that is cooled in the heat exchanger 14 is supplied to the heat exchange unit 30. The battery 31 is cooled using this low-temperature refrigerant. The battery 31 releases heat upon discharge, and hence the battery 31 must be cooled in order to avoid overheating thereof. In the present embodiment, the battery 31 can be cooled, and the temperature of the battery 31 can be kept within a target temperature range, by relying on a simple configuration and a simple control scheme, using the refrigerant that flows through the vapor compression refrigeration cycle 10. Therefore, it becomes easy to control the temperature of the battery 31 appropriately.

After heating the battery 31, the refrigerant undergoes throttle expansion at the expansion valve 16. As a result, the refrigerant that flows into the heat exchanger 18 has the temperature and pressure originally required for cooling the interior of the passenger compartment of the vehicle. It becomes possible therefore to cool the battery 31 without affecting the cooling capacity whereby air in the passenger compartment is cooled.

Returning to FIG. 4, if in step (S40) it is determined that Tcell ≥ Tb, i.e. that the temperature of the battery 31 is equal to or greater than the upper limit value of the target temperature range, then in step (S60) next, the degree of opening of the opening-adjusting valve 40 is reduced, and in step (S80) the degree of opening of the expansion valve 16 is increased.

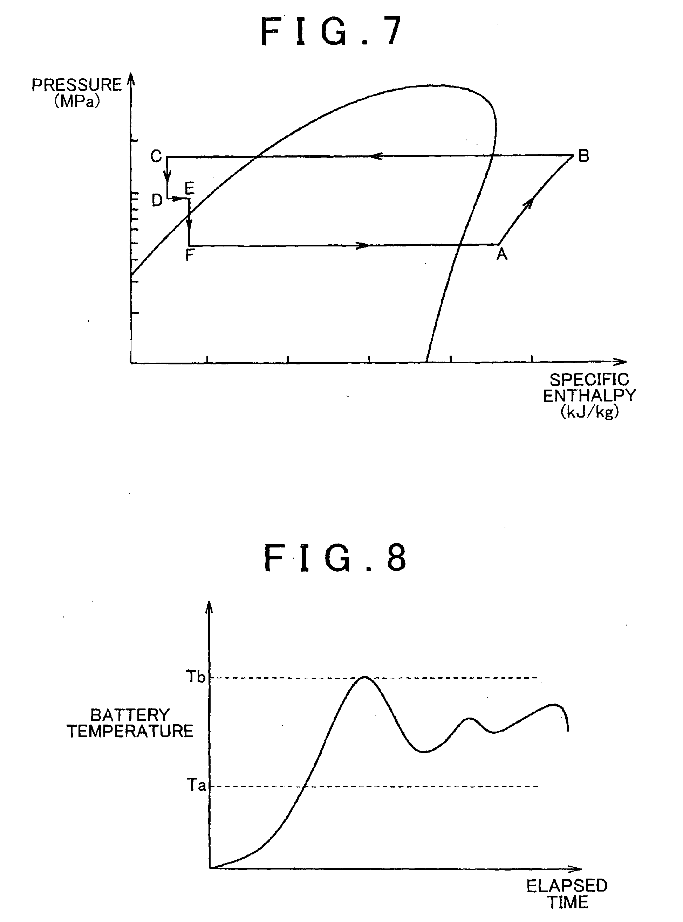

FIG. 7 is a Mollier chart that illustrates a third example of a state of a refrigerant that circulates through the vapor compression refrigeration cycle 10. The abscissa axis of FIG. 7 represents the specific enthalpy of the refrigerant, and the ordinate axis represents the absolute pressure of the refrigerant. The units of specific enthalpy are kJ/kg, and the units of absolute pressure are MPa. The curves in the figure are a saturated vapor line and a saturated liquid line of the refrigerant. FIG. 7 depicts the thermodynamic state of the refrigerant at the various points (i.e. points A, B, C, D, E and F) in the vapor compression refrigeration cycle 10 illustrated in FIG. 1.

The refrigerant in a superheated vapor state (point A) is taken into the compressor 12 and is adiabatically compressed, in the compressor 12, along an isentropic line, as illustrated in FIG. 7. The temperature and pressure of the refrigerant rise in response to compression, and the refrigerant becomes high-temperature, high-pressure superheated vapor having a high degree of superheat (point B), and flows towards the heat exchanger 14. The high-pressure refrigerant vapor that enters the heat exchanger 14 is cooled in the heat exchanger 14, turns isobarically from superheated vapor to dry saturated vapor, releases latent heat of condensation, and liquefies gradually to a wet vapor in a gas-liquid mixed state, when all the refrigerant condenses, it becomes a saturated liquid that further releases sensible heat, to become thereby a supercooled liquid (point C).

The liquefied refrigerant flows into the opening-adjusting valve 40 via the refrigerant passage 22. At this time, the degree of opening of the opening-adjusting valve 40 decreases; as a result, the refrigerant, in a supercooled-liquid state, undergoes throttle expansion at the opening-adjusting valve 40, and the temperature and pressure of the refrigerant drop without change in the specific enthalpy of the refrigerant (point D). In FIG. 7, point C denotes the state of the refrigerant that flows through the refrigerant passage 22, and point D denotes the state of the refrigerant that flows through the refrigerant passage 23. In FIG. 7, the depicted positions are such that of point C and point D have substantially identical specific enthalpy, and the pressure at point D is lower than at point C.

Intermediate-pressure refrigerant having had the pressure and temperature thereof lowered at the opening-adjusting valve 40 flows towards the cooling passage 32 of the heat exchange unit 30, via the refrigerant passage 23, and cools the battery 31. Through heat exchange with the battery 31, the degree of supercooling of the refrigerant decreases, and the temperature of the refrigerant in a supercooled-liquid state rises and approaches the saturation temperature of the liquid refrigerant (point E).

The battery 31 can be cooled by using the refrigerant having had the temperature thereof lowered through throttle expansion at the opening-adjusting valve 40. Therefore, the battery 31 can be cooled yet more efficiently. The temperature of the refrigerant that cools the battery 31 at the heat exchange unit 30 can be arbitrarily adjusted by optimally controlling the degree of opening of the opening-adjusting valve 40. The temperature of the battery 31 is measured by way of the temperature sensors 63, 64. If the temperature of the battery 31 is equal to or greater than the target temperature range, the refrigerant having had the temperature thereof lowered through throttle expansion at the opening-adjusting valve 40 is supplied to the heat exchange unit 30. The battery 31 can be cooled yet more efficiently as a result. Therefore, the temperature of the battery 31 can be lowered promptly to be lower than the upper limit value of the target temperature range; and hence it becomes easy to control the temperature of the battery 31 appropriately.

Thereafter, the refrigerant flows into the expansion valve 16. In the expansion valve 16, the refrigerant in a supercooled-liquid state undergoes throttle expansion, and the temperature and pressure of the refrigerant drop, without change in the specific enthalpy of the refrigerant. Thereby, the refrigerant becomes a low-temperature, low-pressure wet vapor in a gas-liquid mixed state (point F). The refrigerant in a wet vapor state that comes out of the expansion valve 16 absorbs external heat at the heat exchanger 18, and evaporates isobarically by virtue of the latent heat of vaporization. When all the refrigerant has become dry saturated vapor, the temperature of the refrigerant vapor further rises by virtue of the sensible heat, and the vapor becomes superheated vapor (point A) that is taken into the compressor 12. The refrigerant undergoes repeatedly and continuously changes of state, namely, compression, condensation, throttle expansion and evaporation, according to a cycle such as the above-described one.

The refrigerant is cooled in the heat exchanger 14 down to a supercooled liquid, and takes up sensible heat from the battery 31, whereby the refrigerant is heated to a temperature slightly below the saturation temperature. Thereafter, the refrigerant passes through the expansion valve 16 and becomes as a result a low-temperature, low-pressure wet vapor. At the outlet of the expansion valve 16, the refrigerant has the temperature and pressure originally required for cooling the vehicle interior. The heat dissipation capacity of the heat exchanger 14 is established so as to enable sufficient cooling of the refrigerant.

The heat exchange amount between refrigerant and outside air in the heat exchanger 14 is established in such a manner that the temperature of the liquid-phase refrigerant after having passed through the heat exchanger 14 becomes lower than the temperature that is required for cooling the interior of the passenger compartment. The heat exchange amount in the heat exchanger 14 is established so as to be greater, in proportion to the envisaged amount of heat that the refrigerant takes up from the battery 31, than in an instance where the battery 31 is not cooled. By establishing thus the heat exchange amount of the heat exchanger 14, the heat exchange apparatus 1 can cool the battery 31 appropriately without increases in the power of the compressor 12 and while maintaining the vehicle interior cooling performance.

After heating the battery 31, the refrigerant undergoes throttle expansion at the expansion valve 16. As a result, the refrigerant that flows into the heat exchanger 18 has the temperature and pressure originally required for cooling the interior of the passenger compartment of the vehicle. It becomes possible therefore to cool the battery 31 without affecting the cooling capacity whereby air in the passenger compartment is cooled.

After step (S50) and step (S70) or step (S80) illustrated in FIG. 4, the control flow returns, and the process reverts again to reading of the temperature of the battery 31 in step (S10).

FIG. 8 is a time chart illustrating the change over time of battery temperature according to the present embodiment. The abscissa axis in FIG. 8 represents the time elapsed since startup of the battery 31, and the ordinate axis represents the temperature of the battery 31. As illustrated in FIG. 8, when the temperature of the battery 31 immediately after startup of the battery 31 is lower than the lower limit value Ta of the target temperature range, the battery 31 is heated, as explained with reference to FIG. 5; as a result, the temperature of the battery 31 can be raised promptly. The temperature of the battery 31 goes on rising and, when it becomes equal to or greater than the upper limit value Tb of the target temperature range, the cooling capacity of the battery 31 is increased, as explained with reference to FIG. 7; as a result, the temperature of the battery 31 can be lowered promptly. Thereafter, when the temperature of the battery 31 lies within the target temperature range, the battery 31 is cooled as explained with reference to FIG. 6: as a result, the battery 31 can cooled stably.

In the heat exchange apparatus 1 of the present embodiment, as explained above, the temperature of the battery 31 is detected by the temperature sensors 63, 64, and the degree of opening of the opening-adjusting valve 40 is controlled on the basis of the detected temperature of the battery 31. More specifically, when the temperature of the battery 31 is below the target temperature range, the degree of opening of the opening-adjusting valve 40 is increased, to heat the battery 31 thereby. When the temperature of the battery 31 lies within the target temperature range, the degree of opening of the opening-adjusting valve 40 is maintained, to cool the battery 31 thereby. When the temperature of the battery 31 is above the target temperature range, the degree of opening of the opening-adjusting valve 40 is reduced, to increase thereby the cooling capacity of the battery 31.

Thus, the battery 31 can be cooled when the temperature of the battery 31 is high and the battery 31 needs cooling. Also, the temperature of the battery 31 can be controlled in such a manner that the battery 31 is heated when the temperature of the battery 31 is low and the battery 31 requires warm-up. By monitoring the temperature of the battery 31 and adjusting the degree of opening of the opening-adjusting valve 40 according to the temperature of the battery 31, it becomes possible to control optimally the temperature of the refrigerant that flows into the heat exchange unit 30 for heat exchange with the battery 31. Therefore, the temperature of the battery 31 can be controlled stably. The battery 31 can warm up promptly when the temperature of the battery 31 is low, and thus the battery 31 can therefore be enhanced. The cooling performance of the battery 31 can be secured by lowering the refrigerant temperature and by cooling the battery 31 using the low-temperature refrigerant when the battery 31 is at a high temperature. Therefore, the battery 31 can be cooled yet more stably.

Both warming and cooling of the battery 31 can be accomplished by using the refrigerant that circulates through the vapor compression refrigeration cycle 10. Therefore, a heat exchange apparatus 1 can be provided that enables warming and cooling of the battery 31 by relying on a simple configuration. No supplementary device such as an electric heater or the like is required for heating the battery 31. Therefore, both the cost and size of the heat exchange apparatus 1 can be reduced, and power consumption for heating the battery 31 can be likewise reduced. The mileage of the vehicle can be accordingly enhanced.

The heat exchange amount between the refrigerant and outside air in the heat exchanger 14 is controlled on the basis of the temperature of the battery 31, such that when the temperature of the battery 31 is below the target temperature range, the heat exchange amount between the refrigerant and outside air in the heat exchanger 14 is reduced. Doing so allows high-temperature refrigerant to be supplied by the heat exchange unit 30. Therefore, the time that it takes to warm up the battery 31 can be shortened, and the output of the battery 31 can be enhanced promptly.

The degree of opening of the expansion valve 16 is controlled on the basis of the temperature of the battery 31, such that when the temperature of the battery 31 exceeds the target temperature range, the degree of opening of the expansion valve 16 is increased. By doing so, drops in pressure of the refrigerant at the expansion valve 16 can be curbed in a case where the refrigerant undergoes throttle expansion at the opening-adjusting valve 40 in order to cool the battery 31. As a result, it becomes possible to lower the temperature of the refrigerant that is supplied to the heat exchange unit 30, without change in the pressure or specific enthalpy of the refrigerant that flows into the heat exchanger 18. Therefore, the cooling capacity of the battery 31 can be enhanced freely, without affecting the cooling capacity whereby air in the interior of the passenger compartment is cooled using the vapor compression refrigeration cycle 10.

The above explanation of the heat exchange apparatus 1 deals with an instance of regulation of the temperature of a section to be temperature-regulated, exemplified by the battery 31, that is installed in a vehicle. The section to be temperature-regulated, of which temperature is regulated by the heat exchange apparatus 1 of the invention, is not limited to the battery 31. For instance, the section to be temperature-regulated may be an automatic transmission fluid (ATF) cooler that cools an ATF for cooling of a transaxle that is installed in a vehicle.

The ATF recovers heat generated by heat-generating members, such as gears and a motor generator that make up the transaxle, and is cooled at the ATF cooler. The transaxle is cooled as a result. The ATF has to be cooled in order to protect components such as the coils and magnets of the motor generator, and to suppress ATF degradation. If ATF cooling is excessive, however, the viscosity of the ATF increases, which may give rise to insufficient gear lubrication and increased friction loss. Therefore, the ATF is preferably warmed appropriately. Such being the case, an ATF cooler may be used in the heat exchange apparatus 1 of the present embodiment, such that the ATF is cooled and heated at the heat exchange unit 30.

The section to be temperature-regulated is not limited to automotive devices that are installed in a vehicle, and may be any device, or a heat-generating portion of any device, that must be cooled or heated according to various conditions, for instance outside air temperature.

Embodiments of the invention have been explained above, but the disclosed embodiments are all exemplary in character, and must be regarded as non-limiting. The scope of the invention, is defined not by the above explanation but by the appended claims.

The heat exchange apparatus of the invention is particularly advantageous for temperature regulation of a section to be temperature-regulated, such as a battery or the like that must be cooled or heated, by relying on a vapor compression refrigeration cycle for heating and cooling in a vehicle.

## Claims

1. A heat exchange apparatus (1) that exchanges heat between a refrigerant and a section (31) to be temperature-regulated, comprising:
a compressor (12) configured to compress the refrigerant and to cause the refrigerant to circulate in the heat exchange apparatus (1);
a first heat exchanger (14) configured to exchange heat between the refrigerant and outside air;
a second heat exchanger (18) configured to exchange heat between the refrigerant and air for air conditioning;
an opening-adjusting valve (40) configured to adjust a degree of opening of a path of the refrigerant between the first heat exchanger (14) and the section (31) to be temperature-regulated;
an expansion valve (16) that is disposed in a path of the refrigerant between the section (31) to be temperature-regulated and the second heat exchanger (18), the expansion valve being configured to reduce a pressure of the refrigerant;
and **characterized in that** it comprises
a controller (80) configured to control a degree of opening of the opening-adjusting valve, to increase the degree of opening of the opening-adjusting valve (40) to thereby heat the section (31) to be temperature-regulated, and to reduce the degree of opening of the opening-adjusting valve (40) to thereby cool the section (31) to be temperature-regulated.

2. The heat exchange apparatus according to claim 1, further comprising:
a detection device (63) configured to detect a temperature of the section (31) to be temperature-regulated, wherein
the controller (80) controls the degree of opening of the opening-adjusting valve (40) on the basis of the temperature of the section (31) to be temperature-regulated as detected by the detection device (63).

3. The heat exchange apparatus according to claim 2, wherein
the controller (80) increases the degree of opening of the opening-adjusting valve (40) when the temperature of the section (31) to be temperature-regulated, as detected by the detection device (63), is below a target temperature range, and reduces the degree of opening of the opening-adjusting valve (40) when the temperature of the section (31) to be temperature-regulated, as detected by the detection device (63), is above the target temperature range.

4. The heat exchange apparatus according to any one of claims 1 through 3, wherein
the controller (80) controls a degree of opening of the expansion valve (16) on the basis of a temperature of the section (31) to be temperature-regulated.

5. The heat exchange apparatus according to claim 4, wherein
the controller (80) increases the degree of opening of the expansion valve (16) when the temperature of the section (31) to be temperature-regulated is above a target temperature range.

6. The heat exchange apparatus according to any one of claims 1 through 5, wherein
the controller (80) controls a heat exchange amount between the refrigerant and outside air in the first heat exchanger (14) on the basis of a temperature of the section (31) to be temperature-regulated.

7. The heat exchange apparatus according to claim 6, wherein
the controller (80) reduces the heat exchange amount between the refrigerant and the outside air in the first heat exchanger (14) when the temperature of the section (31) to be temperature-regulated is below a target temperature range.

8. A method for controlling a heat exchange apparatus (1) that exchanges heat between refrigerant and a section to be temperature-regulated, wherein
the heat exchange apparatus (1) includes:
a compressor (12) configured to compress the refrigerant and to cause the refrigerant to circulate in the heat exchange apparatus;
a first heat exchanger (14) configured to exchange heat between the refrigerant and outside air;
a second heat exchanger (18) configured to exchange heat between the refrigerant and air for air conditioning;
an opening-adjusting valve (40) configured to adjust a degree of opening of a path of the refrigerant between the first heat exchanger (14) and the section (31) to be temperature-regulated; and
an expansion valve (16) disposed in a path of the refrigerant between the section (31) to be temperature-regulated and the second heat exchanger (18), the expansion valve being configured to reduce a pressure of the refrigerant, the method for controlling the heat exchange apparatus comprising:
determining a temperature of the section (31) to be temperature-regulated;
heating the section (31) to be temperature-regulated by increasing a degree of opening of the opening-adjusting valve (40) when the temperature of the section (31) to be temperature-regulated is below a target temperature range; and
cooling the section (31) to be temperature-regulated by reducing the degree of opening of the opening-adjusting valve (40) when the temperature of the section to be temperature-regulated is above the target temperature range in determining the temperature of the section (31) to be temperature-regulated.

9. The method for controlling the heat exchange apparatus according to claim 8, further comprising:
controlling a heat exchange amount between the refrigerant and outside air in the first heat exchanger (14) on the basis of the temperature of the section (31) to be temperature-regulated in determining the temperature of the section (31) to be temperature-regulated.

10. The method for controlling the heat exchange apparatus according to claim 9, further comprising:
reducing the heat exchange amount between the refrigerant and the outside air in the first heat exchanger (14) when the temperature of the section (31) to be temperature-regulated is below the target temperature range in determining the temperature of the section (31) to be temperature-regulated.

11. The method for controlling the heat exchange apparatus according to claim 8, further comprising:
controlling a degree of opening of the expansion valve (16) on the basis of the temperature of the section (31) to be temperature-regulated in determining the temperature of the section (31) to be temperature-regulated.

12. The method for controlling the heat exchange apparatus according to claim 11, further comprising:
increasing the degree of opening of the expansion valve (16) when the temperature of the section to be temperature-regulated is above the target temperature range in determining the temperature of the section (31) to be temperature-regulated.

## Patentansprüche

1. Wärmeaustauschvorrichtung (1), die Wärme zwischen einem Kältemittel und einer Sektion (31) austauscht, die temperaturgeregelt werden soll, mit
einem Kompressor (12), der eingerichtet ist, um das Kältemittel zu verdichten und zu bewirken, dass das Kältemittel in der Wärmeaustauschvorrichtung (1) zirkuliert;
einem ersten Wärmetauscher (14), der eingerichtet ist, um Wärme zwischen dem Kältemittel und einer Außenluft auszutauschen;
einem zweiten Wärmetauscher (18), der eingerichtet ist, um Wärme zwischen dem Kältemittel und Luft für eine Klimaanlage auszutauschen;
einem Öffnungseinstellventil (40) das eingerichtet ist, um einen Öffnungsgrad eines Kältemittelpfads zwischen dem ersten Wärmetauscher (14) und der Sektion (31) einzustellen, die temperaturgeregelt werden soll;
einem Expansionsventil (16), das in einem Kältemittelpfad zwischen der Sektion (31), die temperaturgeregelt werden soll, und dem zweiten Wärmetauscher (18) angeordnet ist, wobei das Expansionsventil eingerichtet ist, um einen Druck des Kältemittels zu reduzieren; und **dadurch gekennzeichnet, dass**
sie eine Steuereinrichtung (80) aufweist, die eingerichtet ist, um einen Öffnungsgrad des Öffnungseinstellventils zu steuern, um den Öffnungsgrad des Öffnungseinstellventils (40) zu vergrößern, um dadurch die Sektion (31) zu erwärmen, die temperaturgeregelt werden soll, und um den Öffnungsgrad des Öffnungseinstellventils (40) zu reduzieren, um dadurch die Sektion (31) zu kühlen, die temperaturgeregelt werden soll.

2. Wärmeaustauschvorrichtung nach Anspruch 1, ferner mit
einer Erfassungseinrichtung (63), die eingerichtet ist, um eine Temperatur der Sektion (31) zu erfassen, die temperaturgeregelt werden soll, wobei
die Steuereinrichtung (80) den Öffnungsgrad des Öffnungseinstellventils (40) steuert, basierend auf der Temperatur der Sektion (31), die temperaturgeregelt werden soll, die durch die Erfassungseinrichtung (63) erfasst wird.

3. Wärmeaustauschvorrichtung nach Anspruch 2, wobei
die Steuereinrichtung (80) den Öffnungsgrad des Öffnungseinstellventils (40) vergrößert, wenn die Temperatur der Sektion (31), die temperaturgeregelt werden soll, die durch die Erfassungseinrichtung (63) erfasst wird, unterhalb eines Solltemperaturbereichs ist, und den Öffnungsgrad des Öffnungseinstellventils (40) reduziert, wenn die Temperatur der Sektion (31), die temperaturgeregelt werden soll, die durch die Erfassungseinrichtung (63) erfasst wird, oberhalb des Solltemperaturbereichs ist.

4. Wärmeaustauschvorrichtung nach einem der Ansprüche 1 bis 3, wobei
die Steuereinrichtung (80) einen Öffnungsgrad des Expansionsventils (16) basierend auf einer Temperatur der Sektion (31) steuert, die temperaturgeregelt werden soll.

5. Wärmeaustauschvorrichtung nach Anspruch 4, wobei
die Steuereinrichtung (80) den Öffnungsgrad des Expansionsventils (16) vergrößert, wenn die Temperatur der Sektion (31), die temperaturgeregelt werden soll, oberhalb eines Solltemperaturbereichs ist.

6. Wärmeaustauschvorrichtung nach einem der Ansprüche 1 bis 5, wobei
die Steuereinrichtung (80) eine Wärmeaustauschmenge zwischen dem Kältemittel und einer Außenluft in dem ersten Wärmetauscher (14) basierend auf einer Temperatur der Sektion (31) steuert, die temperaturgeregelt werden soll.

7. Wärmeaustauschvorrichtung nach Anspruch 6, wobei
die Steuereinrichtung (80) die Wärmeaustauschmenge zwischen dem Kältemittel und der Außenluft in dem ersten Wärmetauscher (14) reduziert, wenn die Temperatur der Sektion (31), die temperaturgeregelt werden soll, unterhalb eines Solltemperaturbereichs ist.

8. Verfahren zum Steuern einer Wärmeaustauschvorrichtung (1), die Wärme zwischen einem Kältemittel und einer Sektion austauscht, die temperaturgeregelt werden soll, wobei
die Wärmeaustauschvorrichtung (1) Folgendes umfasst:
einen Kompressor (12), der eingerichtet ist, um das Kältemittel zu verdichten, und um zu bewirken, dass das Kältemittel in der Wärmeaustauschvorrichtung zirkuliert;
einen ersten Wärmetauscher (14), der eingerichtet ist, um Wärme zwischen dem Kältemittel und einer Außenluft auszutauschen;
einen zweiten Wärmetauscher (18), der eingerichtet ist, um Wärme zwischen dem Kältemittel und Luft für eine Klimaanlage auszutauschen;
ein Öffnungseinstellventil (40), das eingerichtet ist, um einen Öffnungsgrad eines Kältemittelpfads zwischen dem ersten Wärmetauscher (14) und der Sektion (31) einzustellen, die temperaturgeregelt werden soll; und
ein Expansionsventil (16), das in einem Kältemittelpfad zwischen der Sektion (31), die temperaturgeregelt werden soll, und dem zweiten Wärmetauscher (18) angeordnet ist, wobei das Expansionsventil eingerichtet ist, um einen Druck des Kältemittels zu reduzieren, wobei das Verfahren zum Steuern der Wärmeaustauschvorrichtung folgende Schritte aufweist:
Bestimmen einer Temperatur der Sektion (31), die temperaturgeregelt werden soll;
Erwärmen der Sektion (31), die temperaturgeregelt werden soll, durch Vergrößern eines Öffnungsgrads des Öffnungseinstellventils (40), wenn die Temperatur der Sektion (31), die temperaturgeregelt werden soll, unterhalb eines Solltemperaturbereichs ist; und
Kühlen der Sektion (31), die temperaturgeregelt werden soll, durch Reduzieren des Öffnungsgrads des Öffnungseinstellventils (40), wenn die Temperatur der Sektion, die temperaturgeregelt werden soll, beim Bestimmten der Temperatur der Sektion (31), die temperaturgeregelt werden soll, oberhalb des Solltemperaturbereichs ist.

9. Verfahren zum Steuern der Wärmeaustauschvorrichtung nach Anspruch 8, ferner mit
einem Steuern einer Wärmeaustauschmenge zwischen dem Kältemittel und einer Außenluft in dem ersten Wärmetauscher (14), basierend auf der Temperatur der Sektion (31), die temperaturgeregelt werden soll, beim Bestimmen der Temperatur der Sektion (31), die temperaturgeregelt werden soll.

10. Verfahren zum Steuern der Wärmeaustauschvorrichtung nach Anspruch 9, ferner mit
einem Reduzieren der Wärmetauschmenge zwischen dem Kältemittel und der Außenluft in dem ersten Wärmetauscher (14), wenn die Temperatur der Sektion (31), die temperaturgeregelt werden soll, beim Bestimmen der Temperatur der Sektion (31), die temperaturgeregelt werden soll, unterhalb des Solltemperaturbereichs ist.

11. Verfahren zum Steuern der Wärmeaustauschvorrichtung nach Anspruch 8, ferner mit
einem Steuern eines Öffnungsgrads des Expansionsventils (16), basierend auf der Temperatur der Sektion (31), die temperaturgeregelt werden soll, beim Bestimmen der Temperatur der Sektion (31), die temperaturgeregelt werden soll.

12. Verfahren zum Steuern der Wärmeaustauschvorrichtung nach Anspruch 11, ferner mit
einem Vergrößern des Öffnungsgrads des Expansionsventils (16), wenn die Temperatur der Sektion, die temperaturgeregelt werden soll, beim Bestimmen der Temperatur der Sektion (31), die temperaturgeregelt werden soll, oberhalb des Solltemperaturbereichs ist.

## Revendications

1. Appareil d'échange de chaleur (1) qui échange de la chaleur entre un réfrigérant et une section (31) devant être régulée en température, comportant :
un compresseur (12) configuré pour comprimer le réfrigérant et pour amener le réfrigérant à circuler dans l'appareil d'échange de chaleur (1) ;
un premier échangeur de chaleur (14) configuré pour échanger de la chaleur entre le réfrigérant et de l'air extérieur ;
un deuxième échangeur de chaleur (18) configuré pour échanger de la chaleur entre le réfrigérant et de l'air pour la climatisation ;
une soupape d'ajustement d'ouverture (40) configurée pour ajuster un degré d'ouverture d'un passage du réfrigérant entre le premier échangeur de chaleur (14) et la section (31) devant être régulée en température ;
une soupape de détente (16) qui est disposée dans un passage du réfrigérant entre la section (31) devant être régulée en température et le deuxième échangeur de chaleur (18), la soupape de détente étant configurée pour réduire une pression du réfrigérant ; et
**caractérisé en ce qu'**il comporte
un dispositif de commande (80) configuré pour commander un degré d'ouverture de la soupape d'ajustement d'ouverture ; pour augmenter le degré d'ouverture de la soupape d'ajustement d'ouverture (40) afin de chauffer ainsi la section (31) devant être régulée en température, et pour réduire le degré d'ouverture de la soupape d'ajustement d'ouverture (40) afin de refroidir ainsi la section (31) devant être régulée en température.

2. Appareil d'échange de chaleur selon la revendication 1, comportant en outre :
un dispositif de détection (63) configuré pour détecter une température de la section (31) devant être régulée en température, dans lequel
le dispositif de commande (80) commande le degré d'ouverture de la soupape d'ajustement d'ouverture (40) sur la base de la température de la section (31) devant être régulée en température telle que détectée par le dispositif de détection (63).

3. Appareil d'échange de chaleur selon la revendication 2, dans lequel
le dispositif de commande (80) augmente le degré d'ouverture de la soupape d'ajustement d'ouverture (40) quand la température de la section (31) devant être régulée en température, telle que détectée par le dispositif de détection (63), est en-dessous d'une plage de température de cible, et réduit le degré d'ouverture de la soupape d'ajustement d'ouverture (40) quand la température de la section (31) devant être régulée en température, telle que détectée par le dispositif de détection (63), est au-dessus de la plage de température de cible.

4. Appareil d'échange de chaleur selon l'une quelconque des revendications 1 à 3, dans lequel
le dispositif de commande (80) commande un degré d'ouverture de la soupape de détente (16) sur la base d'une température de la section (31) devant être régulée en température.

5. Appareil d'échange de chaleur selon la revendication 4, dans lequel
le dispositif de commande (80) augmente le degré d'ouverture de la soupape de détente (16) quand la température de la section (31) devant être régulée en température est au-dessus d'une plage de température de cible.

6. Appareil d'échange de chaleur selon l'une quelconque des revendications 1 à 5, dans lequel
le dispositif de commande (80) commande une quantité d'échange de chaleur entre le réfrigérant et l'air extérieur dans le premier échangeur de chaleur (14) sur la base d'une température de la section (31) devant être régulée en température.

7. Appareil d'échange de chaleur selon la revendication 6, dans lequel
le dispositif de commande (80) réduit la quantité d'échange de chaleur entre le réfrigérant et l'air extérieur dans le premier échangeur de chaleur (14) quand la température de la section (31) devant être régulée en température est en-dessous d'une plage de température de cible.

8. Procédé de commande d'un appareil d'échange de chaleur (1) qui échange de la chaleur entre le réfrigérant et une section devant être régulée en température, selon lequel
l'appareil d'échange de chaleur (1) comprend :
un compresseur (12) configuré pour comprimer le réfrigérant et pour amener le réfrigérant à circuler dans l'appareil d'échange de chaleur ;
un premier échangeur de chaleur (14) configuré pour échanger de la chaleur entre le réfrigérant et de l'air extérieur ;
un deuxième échangeur de chaleur (18) configuré pour échanger de la chaleur entre le réfrigérant et de l'air pour la climatisation ;
une soupape d'ajustement d'ouverture (40) configurée pour ajuster un degré d'ouverture d'un passage du réfrigérant entre le premier échangeur de chaleur (14) et la section (31) devant être régulée en température ; et
une soupape de détente (16) disposée dans un passage du réfrigérant entre la section (31) devant être régulée en température et le deuxième échangeur de chaleur (18), la soupape de détente étant configurée pour réduire une pression du réfrigérant, le procédé destiné à commander l'appareil d'échange de chaleur comportant le fait de :
déterminer une température de la section (31) devant être régulée en température ;
chauffer la section (31) devant être régulée en température en augmentant un degré d'ouverture de la soupape d'ajustement d'ouverture (40) quand la température de la section (31) devant être régulée en température est en-dessous d'une plage de température de cible ; et
refroidir la section (31) devant être régulée en température en réduisant le degré d'ouverture de la soupape d'ajustement d'ouverture (40) quand la température de la section devant être régulée en température est au-dessus de la plage de température de cible en déterminant la température de la section (31) devant être régulée en température.

9. Procédé de commande de l'appareil d'échange de chaleur selon la revendication 8, comportant en outre le fait de :
commander une quantité d'échange de chaleur entre le réfrigérant et l'air extérieur dans le premier échangeur de chaleur (14) sur la base de la température de la section (31) devant être régulée en température en déterminant la température de la section (31) devant être régulée en température.

10. Procédé de commande de l'appareil d'échange de chaleur selon la revendication 9, comportant en outre le fait de :
réduire la quantité d'échange de chaleur entre le réfrigérant et l'air extérieur dans le premier échangeur de chaleur (14) quand la température de la section (31) devant être régulée en température est en-dessous de la plage de température de cible en déterminant la température de la section (31) devant être régulée en température.

11. Procédé de commande de l'appareil d'échange de chaleur selon la revendication 8, comportant en outre le fait de :
commander un degré d'ouverture de la soupape de détente (16) sur la base de la température de la section (31) devant être régulée en température en déterminant la température de la section (31) devant être régulée en température.

12. Procédé de commande de l'appareil d'échange de chaleur selon la revendication 11, comportant en outre le fait de :
augmenter le degré d'ouverture de la soupape de détente (16) quand la température de la section devant être régulée en température est au-dessus de la plage de température de cible en déterminant la température de la section (31) devant être régulée en température.
